Europäisches Patentamt

European Patent Office

Office européen des brevets

(19)

(11) Publication number: **0 320 474**

A1

# (12) EUROPEAN PATENT APPLICATION

(21) Application number: **88850384.4**

(22) Date of filing: **08.11.88**

(51) Int. Cl.⁴: **A 01 G 3/08**
**B 23 D 61/12**

(30) Priority: **07.12.87 SE 8704869**

(43) Date of publication of application:
**14.06.89 Bulletin 89/24**

(84) Designated Contracting States: **AT DE FR GB**

(71) Applicant: **SANDVIK AKTIEBOLAG**
**S-811 81 Sandviken 1 (SE)**

(72) Inventor: **Wenzel, Gerhard**
**Kaserngatan 39**
**S-802 25 Gävle (SE)**

(74) Representative: **Taquist, Lennart et al**
**Sandvik AB Patents & Licences Fack**
**S-811 81 Sandviken 1 (SE)**

(54) Pruning saw.

(57) A pruning saw with two toothed edges is divided by a lengthwise fold (11) in two flat portions (12,13) to make it possible to cut branches near the trunk without damaging the bark.

**Description**

**Pruning Saw**

Pruning of branches and twigs from growing trees is commonly performed in gardens, along roads and under the term green limbing in forestry to obtain lumber free of knots. In all these cases one desires to cut the branches as close to the trunk as possible without damaging the bark of the trunk, since bark damage and tear may be the starting points of rot fungus attacks.

Until now pruning and green limbing has mostly been done with pole shears, as the patents US 2.242.476, US 4.696.107 and SE 137.436, or pruning saws on long poles. Both of these devices have been shown to be liable to damage the bark with the back side of the shears or the sawblades.

The present invention defines a new type of pruning saw which solves the above problem. The invention is characterized by the sawblade being divided by a lengthwise fold into two flat portions.

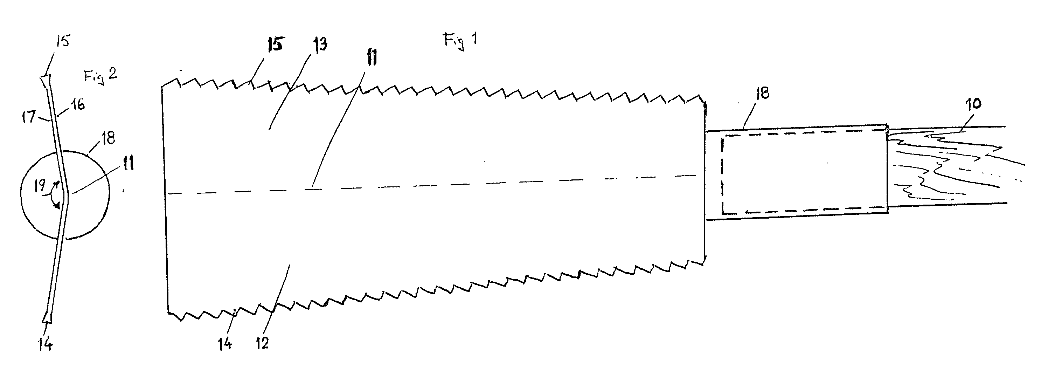

The invention is further described below with reference to the accompanying figures, where figure 1 shows a side view of one embodyment of the invention, and figure 2 shows an end view of the same embodyment as figure 1.

A pruning saw according to the invention comprises a relatively broad blade with a lengthwise fold (11) which divides the blade into two flat portions (12,13) each with a toothed edge (14,15). The fold thus gives the sawblade one convex side (16) and one concave (17). At one end there is a socket type fastener (18) to which can be fastened a pole (10) of appropriate length for the height of the branch. When sawing, the convex side (16) is held towards the tree trunk.

If the saw and the pole (10) are then during sawing deliberately or accidentally rotated, the bark of the trunk can then only be touched by the smooth fold (11) on the convex side (16) which can not damage the bark. One can also make sure that the cut is started at the correct distance from the trunk by making the initial motions of the saw with the working edge of the sawblade turned outwards and the fold (11) sliding against the bark, thereafter rotating the saw and the pole to make the rest of the cut vertically.

The angle (19) between the portions (12,13) separated by the fold (11) should preferrably be between 120° and 170°. The saw is preferrably designed with a centrally located fold (11) to make the portions (12,13) equally wide. By having two toothed edges (14,15) the saw can be used on both the right and the left side of the trunk, and both above and below the branches.

By making the sawblade narrower at the end adjoining the socket (18), the feed force needed to make the toothed edges (14,15) cut into the branch will have a larger component directed as a pulling force along the pole, avoiding bending of the pole.

**Claims**

1. Pruning saw comprising a sawblade and a fastening device such as a socket (18) which can be fastened to a pole of sufficient length to reach high branches, characterized in that the sawblade is divided by a lengthwise fold into two basically flat portions (12,13) each with a toothed edge (14,15).

2. Pruning saw according to claim 1, characterized in that the sawblade is narrowest at the end adjoining the socket (18).

3. Pruning saw according to claims 1 or 2, characterized in that the angle between the flat portions (12,13) of the sawblade is 120° to 170°.

4. Pruning saw according to claims 1, 2 or 3, characterized in that the fold (11) is centrally located making the portions (12,13) equally wide.

Fig 1

Fig 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-U-8514381 (MASCHINENFABRIK RAU) <br> * page 5, line 15 - page 6, line 28; figure 1 * | 1 | A01G3/08 <br> B23D61/12 |
| A | US-A-3348309 (JONES) <br> * column 3, line 23 - column 4, line 47; figures 1, 3 * | 1 | |
| A | DE-U-8603266 (HERRIGER) <br> * page 7, paragraph 2 - page 8, paragraph 1; figures 1, 3, 5 * | 1 | |
| A | US-A-2836209 (ZERN) <br> * column 3, line 23 - line 46; figure 3 * | 1 | |
| A | FR-A-738723 (CALIBANI) <br> * the whole document * | 1 | |

|  |  |  | TECHNICAL FIELDS SEARCHED (Int. Cl.4) |
|---|---|---|---|
|  |  |  | A01G <br> B23D |

The present search report has been drawn up for all claims

| Place of search | Date of completion of the search | Examiner |
|---|---|---|
| THE HAGUE | 15 MARCH 1989 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)